# EUROPÄISCHE PATENTSCHRIFT

(11) **EP 1 768 824 B1**
(45) Veröffentlichungstag und Bekanntmachung des Hinweises auf die Patenterteilung: **19.03.2008**
(21) Anmeldenummer: 05752355.7
(22) Anmeldetag: 27.06.2005
(51) Int. Cl.: B29B 17/00, B29B 13/10, B29C 47/10, B29B 7/74, B01F 13/10, B01F 7/16

(54) **VORRICHTUNG UND VERFAHREN ZUR AUFBEREITUNG VON THERMOPLASTISCHEM, ZU RECYCELNDEM KUNSTSTOFFMATERIAL**
DEVICE AND METHOD FOR THE PREPARATION OF RECYCLABLE THERMOPLASTIC PLASTIC MATERIAL
DISPOSITIF ET PROCEDE DE TRAITEMENT DE MATIERE PLASTIQUE THERMOPLASTIQUE A RECYCLER

(30) Priorität: 16.07.2004 AT 12172004
(43) Veröffentlichungstag der Anmeldung: 04.04.2007
(73) Patentinhaber: EREMA Engineering Recycling Maschinen und Anlagen Gesellschaft m.b.H., 4052 Ansfelden-Linz (AT)
(72) Erfinder: BACHER, Helmut, A-4490 St. Florian (AT); SCHULZ, Helmuth, A-4020 Linz (AT); HACKL, Manfred, A-4490 St. Florian (AT)
(74) Vertreter: Wildhack, Helmut
(86) Internationale Anmeldenummer: PCT/AT2005/000235
(87) Internationale Veröffentlichungsnummer: WO 2006/007610

(56) Entgegenhaltungen:
- EP-A- 1 057 604
- WO-A-89/07042
- WO-A-03/103915
- FR-A- 1 301 959
- US-A- 4 344 579
- US-A- 5 536 154
- US-B1- 6 619 575
- US-B1- 6 784 214

## Beschreibung

Die Erfindung bezieht sich auf eine Vorrichtung zur Aufbereitung von thermoplastischem, zu recycelndem Kunststoffmaterial, mit zumindest zwei in Bezug auf den Materialfluss aufeinanderfolgenden Behandlungsstufen für das Material, wobei in jeder Stufe das Material in einen Aufnahmebehälter von oben eingebracht und im Aufnahmebehälter durch umlaufende Werkzeuge erwärmt und gemischt, gegebenenfalls auch zerkleinert, wird und das so behandelte Material aus dem betreffenden Aufnahmebehälter mittels eines Austragsorganes, vorzugsweise mittels zumindest einer Schnecke, ausgebracht wird. Weiters bezieht sich die Erfindung auf ein Verfahren zur Aufbereitung von thermoplastischem, zu recycelndem Kunststoffmaterial unter Verwendung einer eingangs erwähnten Vorrichtung.

Eine Vorrichtung der eingangs geschilderten Art ist bekannt (AT 411235 B). Bei einer solchen bekannten Vorrichtung findet ein kontinuierlicher Materialfluss durch die beiden in Serie geschalteten, unter Vakuum stehenden Aufnahmebehälter statt. Damit lässt sich in den meisten Fällen ein recyceltes Kunststoffprodukt mit ausreichender Qualität erreichen. Auf dem Gebiet der Lebensmittelverpackungen, insbesondere Getränkeflaschen, bestehen jedoch besonders hohe Anforderungen hinsichtlich der Dekontaminierung des behandelten Kunststoffmateriales. Die Qualität der Dekontaminierung hängt ab von den bei der Behandlung herrschenden Vakuum- und Temperaturbedingungen und insbesondere von der Verweilzeit, welche die einzelnen Kunststoffteilchen im Aufnahmebehälter verbringen.

Die Erfindung setzt sich zur Aufgabe, die geschilderten Anforderungen zu erfüllen und eine Vorrichtung der eingangs geschilderten Art so zu verbessern, dass die kürzeste Verweilzeit für alle Materialpartikel zumindest annähernd gleich gemacht wird, so dass aus der Vorrichtung ein hinsichtlich der Dekontaminierung wesentlich verbessertes Material erhalten wird. Die Erfindung löst diese Aufgabe dadurch, dass in der ersten Stufe oder in zumindest einer darauf folgenden Stufe zumindest zwei evakuierbare Aufnahmebehälter vorhanden sind, die parallel an einen evakuierbaren Aufnahmebehälter der letzten Stufe angeschlossen sind, wobei eine Einrichtung zur alternierenden batchweisen Beschickung des Aufnahmebehälters der letzten Stufe aus den Aufnahmebehältern der vorangehenden Stufe vorgesehen ist, und dass das Austragsorgan jedes Aufnahmebehälters der vorangehenden Stufe in einen Kanal fördert, in welchem für jeden' Aufnahmebehälter der vorangehenden Stufe ein Absperrorgan vorgesehen ist, welches von der Einrichtung zur alternierenden batchweisen Beschickung des Aufnahmebehälters der letzten Stufe gesteuert ist. Während also bei der eingangs beschriebenen bekannten Vorrichtung ein kontinuierlicher Durchlauf des Materiales durch die beiden Stufen der Vorrichtung stattfindet, findet bei der erfindungsgemäßen Vorrichtung die Beschickung des Aufnahmebehälters der letzten Stufe jeweils von einem anderen Aufnahmebehälter der vorangehenden Stufe statt. Während dieser Beschickung aus dem betreffenden Aufnahmebehälter der vorangehenden Stufe wird im anderen Behälter oder in den anderen Behältern der vorangehenden Stufe die Füllung vorgenommen und das Material auf die erforderliche Temperatur durch die umlaufenden Werkzeuge gebracht und gehalten und somit in der gewünschten Weise vorbereitet. Sobald aus dem bisher in Flussverbindung mit dem Aufnahmebehälter der letzten Stufe stehenden Aufnahmebehälter der vorangehenden Stufe seine Entleerung abgeschlossen ist, wird durch die erwähnte Einrichtung umgeschaltet, so dass nunmehr ein anderer Aufnahmebehälter der vorangehenden Stufe in Flussverbindung mit dem Aufnahmebehälter der letzten Stufe gebracht wird und mittels des Austragsorganes in diesen entleert wird. Währenddessen kann der frühere entleerte Aufnahmebehälter der vorangehenden Stufe erneut befüllt und das in ihm befindliche Material auf die gewünschte Temperatur gebracht werden. In analoger Weise wird vorgegangen, wenn die vorangehende Stufe mehr als zwei Behälter enthält. Die Absperrorgane im Kanal gewährleisten einen verlässlichen Abschluss aller jener Aufnahmebehälter der vorangehenden Stufe, welche gerade befüllt werden bzw. in welchen eine Vorerwärmung (und gegebenenfalls Zerkleinerung) des behandelnden Materiales stattfindet, in Bezug auf den Aufnahmebehälter der letzten Stufe. Sie sichern auch die für die Behandlung kontaminierten Kunststoffmaterials wichtigen Vakuumbedingungen und Verweilzeiten. Damit gelingt es, die Verweilzeit für alle Materialpartikel so zu gestalten, dass die ständig gesteigerten Qualitätsanforderungen an recyceltes Kunststoffprodukt, das auf dem Gebiet der Lebensmittelverpacküngen eingesetzt werden soll, erfüllt werden. Es ist sogar möglich, noch höhere Grenzwerte für spezielle Anwendungen einzuhalten.

Zweckmäßig sind im Rahmen der Erfindung die Absperrorgane von Schiebern gebildet, die hydraulisch oder pneumatisch betätigt werden können.

Aus EP 1 057 604 A1 ist eine. Vorrichtung zur Verarbeitung von Kautschukmischungen bekannt geworden, welche einen Stempelkneter zum Plastifizieren der Grundmischung aufweist, dem mehrere stempellose Kneter zugeordnet sind, die nacheinander vom Stempelkneter beschickt werden und unabhängig voneinander nach' Abkühlung der Kautschukmischung und Einmischen von Vernetzungsmitteln ihre Chargen an ein nachgeschaltetes Aggregat abgeben. Eine solche Vorrichtung eignet sich nicht zur Erzeugung recycelten Kunststoffgutes, das auf dem Gebiet der Lebensmittelverpackungen eingesetzt werden soll.

Häufig ist es zweckmäßig, die erfindungsgemäße Vorrichtung so auszubilden, dass der Kanal die Austragsöffnungen der Aufnahmebehälter der vorangehenden Stufe oder die Ausgangsöffnungen der Austragsorgane dieser Aufnahmebehälter mit einer Beschickungsöffnung des Aufnahmebehälters der letzten Stufe verbindet und dass die Einrichtung eine Steuereinrichtung aufweist, welche die Absperrorgane im Sinne eines wechselweisen Abschlusses der Aufnahmebehälter der vorangehenden Stufe in Bezug auf den Aufnahmebehälter der letzten Stufe steuert.

Das erfindungsgemäße Verfahren zur Aufbereitung von thermoptastischem, zu recycelndem Kunststoffmaterial geht aus von einem Verfahren unter Benutzung einer eingangs geschilderten Vorrichtung und kennzeichnet sich erfindungsgemäß dadurch, dass der Aufnahmebehälter der letzten Stufe Von den Aufnahmebehältern der vorangehenden Stufe wechselweise und möglichst kontinuierlich beschickt wird. Wie bereits erwähnt, lässt sich durch diese, verfahrensmäßig einfach durchführbare Vorgangsweise eine wesentlich verbesserte Dekontaminierung über eine gezielte Mindestverweilzeif des behandelten Materiales erzielen.

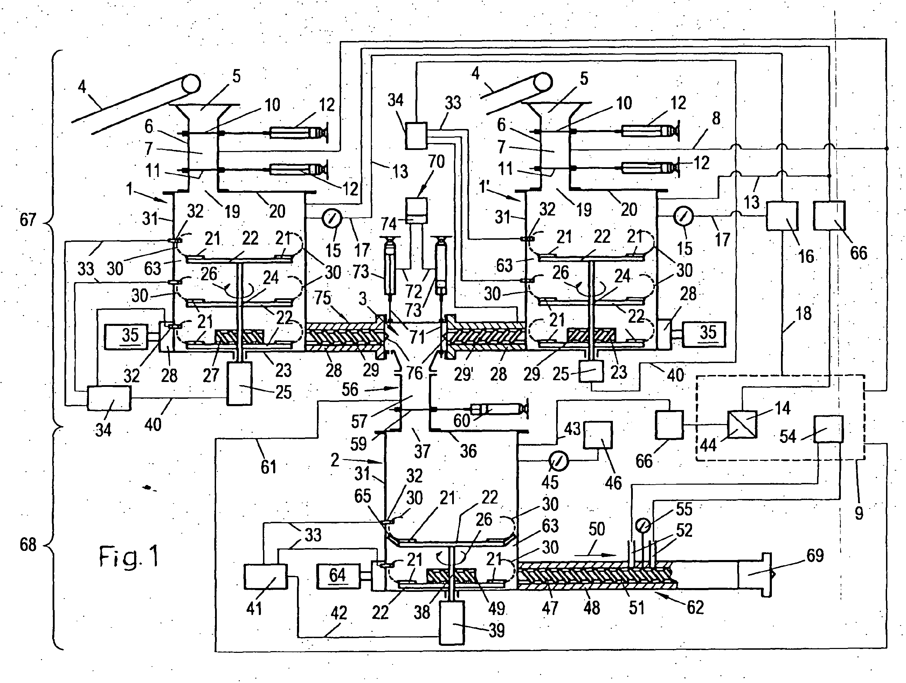

Weitere Kennzeichen und Vorteile der erfindungsgemäßen Vorrichtung bzw. des erfindungsgemäßen Verfahrens sind aus der folgenden Beschreibung von Ausführungsbeispielen ersichtlich, wobei die Vorrichtungen in den Zeichnungen schematisch dargestellt sind. Die Fig. 1 bis 4 zeigen jeweils ein Ausführungsbeispiel im Vertikalschnitt.

Die Vorrichtung nach Fig. 1 hat zwei Stufen 67, 68 der Behandlung des thermoplastischen Kunststoffmateriales, welches häufig PET (Polyäthylenterephthalat) ist, insbesondere in Form von Mahlgut aus Flaschen und Flaschenvörformlingen, Folien, Fasern usw., gegebenenfalls in vorzerkleinerter Form. Die erste Stufe 67 hat im dargestellten Ausführungsbeispiel zwei Aufnahmebehälter 1, 1' denen das zu behandelnde Material über Förderbänder 4 und Trichter 5 zugeführt wird. Zur Vakuumbehandlung in den Aufnähmebehältern 1, 1' kann für die Einbringung des Materials eine Schleuse 6 vorgesehen sein, die als Vakuumschleuse ausgebildet ist, wobei ihr Innenraum 7 über eine Leitung 8 an eine Evakuiereinrichtung 9 angeschlossen. Jede Schleuse 6 hat oben und unten zwei vakuumdicht abschließende Schieber 10, 11, die von doppeltwirkenden, zweckmäßig hydraulisch oder pneumatisch betätigten, Zylindern 12 verschoben werden können. Dadurch kann auch bei laufender Einbringung des zu recycelndem Gutes in den jeweiligen Behälter 1 bzw. 1' in diesem ein ausreichendes Vakuum aufrecht erhalten werden. Ferner ist zur Vakuumbehandlung des Materiales der Innenraum jedes Behälters 1, 1' über eine Leitung 13 an eine Vakuumpumpe 14 der Evakuiereinrichtung 9 angeschlossen. Ein Vakuummessgerät 15 misst ständig das Vakuum und gibt die Messwerte über eine Leitung 17 einer Überwachungseinrichtung 16 ein, die über eine Leitung 18 die Evakuiereinrichtung 9 so steuert, dass in den Behältern stets das gewünschte Vakuum aufrecht erhalten wird.

Jede Schleuse 6 ist an eine Einbringeöffnung 19 im Deckel 20 des betreffenden Behälters 1, 1' angeschlossen, so dass das zu behandelnde Kunststoffmaterial im Behälter 1 und 1' von oben auf Werkzeuge 21 fällt, die auf mehreren Werkzeugträgern 22 montiert sind, die übereinander auf einer vertikalen, den Behälterboden 23 vakuumdicht durchsetzenden Welle 24 sitzen und von einem Motor 25 zum Umlauf um die Achse der Welle 24 in Richtung des Pfeiles 26 angetrieben sind. Der unterste dieser Werkzeugträger 22 liegt knapp über dem Boden 23 des Behälters 1 bzw. 1' derart, dass die von ihm getragenen Werkzeuge 21 auf der Höhe einer Austragsöffnung 27 liegen, die mit der Einzugsöffnung eines Gehäuses 28 einer Schnecke 29 bzw. 29' in Strömungsverbindung steht, welches Gehäuse 28 tangential an den Behälter 1 angeschlossen ist. Dadurch drücken die umlaufenden Werkzeuge 21 des untersten Werkzeugträgers 22 das bearbeitete Material in die Gänge der Schnecke 29 ein, einerseits durch Zentrifugalwirkung und andererseits nach Art einer Spachtel, wenn die Werkzeuge 21 am Werkzeugträger 22 entsprechend angeordnet sind. Gegebenenfalls kann die Schnecke 29 bzw. 29' durch eine Zellenradschleuse od. dgl. als Austragsorgan ersetzt werden.

Die Werkzeuge 21 veranlassen das von ihnen erfasste Kunststoffgut zum Umlauf um die Achse des Behälters 1 bzw. 1', wobei das Gut durch die eingebrachte Mischenergie erwärmt wird und in Form einer Mischtrombe, 30 hochsteigt. Im Abstand oberhalb des Werkzeugträgers 22 ist im Bereich der Mischtrombe an der Seitenwand 31 des jeweiligen Behälters 1, 1' ein Temperaturfühler 32 angeordnet, wobei diese Temperaturfühler über Leitungen 33 an eine Regeleinrichtung 34 angeschlossen sind, die über eine Leitung 40 die Drehzahl des Motors 25 so steuert, dass Überhitzungen des im Behälter 1 bzw. 1' bearbeiteten Gutes vermieden werden.

Die durch einen Motor 35 angetriebene Schnecke 29 bzw. 29' fördert das im Behälter 1 bzw. 1' bearbeitete Material in einen Kanal 3, welcher die Austragsöffnungen 27 der beiden Behälter 1, 1' bzw. die Ausgangsöffnungen der beiden Schneckengehäuse 28 mit der Beschickungsöffnung 37 im Deckel 36 eines Aufnahmebehälters 2 der zweiten Stufe 68 verbindet. Auch der Behälter 2 ist evakuierbar und hiefür über eine Leitung 43 an eine Vakuumpumpe 44 der Evakuiereinrichtung 9 angeschlossen. Es können alle Behälter 1, 1', 2 mittels derselben Vakuumpumpe evakuiert werden, doch ist es, um die Anlage vielseitiger zu machen, zweckmäßiger, gesonderte Vakuumpumpen 14, 44 für die Behälter vorzusehen, da auf diese Weise unterschiedliche Unterdruckbedingungen in den Behältern 1, 1' bzw. 2 auf einfache Weise erzielbar sind und aufrecht erhalten werden können. Der Druck im Behälter 2 wird mittels eines Vakuummessgerätes 45 gemessen und über eine Überwachungseinrichtung 46 an die Evakuiereinrichtung 9 gemeldet, so dass im Behälter 2 stets die gewünschten Vakuumbedingungen aufrecht erhalten werden können.

Aus dem Behälter 2 wird das aufbereitete Kunststoffmaterial mittels einer Schnecke 47 ausgebracht, wobei die Einzugsöffnung des Schneckengehäuses 48 in ähnlicher Weise an eine Austragsöffnung 49 des Behälters 20 angeschlossen ist, wie dies für die Behälter 1, 1' beschrieben wurde. Diese Austragsöffnung 49 liegt auf der Höhe der vom untersten Werkzeugträger 22 getragenen Werkzeuge 21 des Behälters 2, so dass die Befüllung der Schnecke 47 in ähnlicher Weise erfolgt, wie dies für die Schnecken 29, 29' beschieben würde. Der Kerndurchmesser der Schnecke 47 vergrößert sich in Förderrichtung (Pfeil 50), so dass das von der Schnecke 47 transportierte Material zunächst komprimiert wird. Dadurch wirkt die Schnecke 47 zusammen mit ihrem Gehäuse 48 als vakuumdichter Abschluss des Behälters 2. Im Anschluss an diese Kompressionszone verringert sich der Kerndurchmesser der Schnecke 47 wieder, so dass eine Entspannungszone 51 entsteht, in der das Schneckengehäuse 48 durch zumindest eine Entgasungsöffnung 52 durchsetzt ist. An diese Öffnungen 52 sind Leitungen 53 für die Abfuhr der Gase vorgesehen, dies kann durch eine Vakuumpumpe 54 der Evakuierungseinrichtung 9 unterstützt werden. Das so erzeugte Vakuum kann mittels eines Vakuummessgerätes 55 überwacht werden. An den Ausgang des Schneckengehäuses 48 kann eine Filtereinrichtung und/oder ein Extruderkopf mit einer Granuliereinrichtung 69 angeschlossen sein, oder eine Formanlage.

Während die zweite Stufe 68 kontinuierlich arbeitet, um eine kontinuierliche Versorgung der Granuliereinrichtung 69 oder einer gegebenenfalls sie ersetzenden Form sicherzustellen, arbeiten die Behälter der ersten Stufe 67 batchweise (portionenweise) derart, dass stets nur einer der Behälter 1, 1' der ersten Stufe 67 materialflussmäßig mit dem Behälter 2 der zweiten Stufe 68 in Verbindung steht, der andere Behälter 1 bzw. 1' der ersten Stufe 67 hingegen in Bezug auf den Behälter 2 abgeschlossen ist. Hiefür ist eine Einrichtung 70 vorgesehen, die mittels einer Steuereinrichtung 74 die zwei zweckmäßig von Schiebern gebildete Absperrorgane 71 so steuert, dass das eine Absperrorgan 71 offen ist, wenn das andere Absperrorgan 71 geschlossen ist. Die Offenstellung ist für das linke Absperrorgan 71 dargestellt, die Geschlossenstellung für das rechte Absperrorgan 71. Die Steuereinrichtung 74 ist über Leitungen 72 mit doppeltwirkenden Zylindern 73 verbunden, über welche die Schieber 71 verschoben werden. Zweckmäßig sind die beiden Schieber 71 nahe dem Ausgang des betreffenden Schneckengehäuses 28 angeordnet.

Im Betrieb wird so vorgegangen, dass der Aufnahmebehälter 2 der zweiten Stufe 68 wechselweise, also alternierend, von jeweils einem der Aufnahmebehälter 1, 1' der ersten Stufe 67 beschickt wird. Während die Beschickung des Behälters 2 von einem der Behälter der ersten Stufe 67 erfolgt, werden die jeweils anderen Behälter dieser Stufe 67 befüllt und durch die umlaufenden Werkzeuge 21 das in ihnen befindliche Material auf die gewünschte Temperatur gebracht und auf dieser Temperatur gehalten. Da während dieses Vorganges der betreffende Behälter 1 bzw. 1' durch das ihm zugeordnete Absperrorgan 71 in Bezug auf den Behälter 2 abgeschlossen ist und natürlich die betreffende Schnecke 29 stillgesetzt ist, kann das im betreffenden Behälter 1 bzw. 1' befindliche Material nicht aus diesem Behälter entweichen und muss daher in ihm die gewünschte Verweilzeit verbringen. Dies bedeutet, dass jedes betreffende Materialteilchen für eine ausreichende Verweilzeit unter den im betreffenden Behälter 1 bzw. 1' herrschenden Temperatur- und Druckbedingungen steht. Damit wird eine wesentlich verbesserte Dekontaminierung jedes Materialteilchens erzielt.

Sobald durch entsprechende Überwachung der Temperatur- und Druckbedingungen festgestellt ist, dass die im betreffenden Behälter 1 bzw. 1' befindlichen Materialteilchen den gewünschten Zustand erreicht haben, wird mittels der Einrichtung 70 umgeschaltet, so dass die zuvor im betreffenden Behälter 1 bzw. 1' vorbehandelten Materialteilchen nunmehr mittels der Schnecke 29 bzw. 29' aus dem betreffenden Behälter 1 bzw. 1' abgeführt und über den Verbindungskanal 3 in den Behälter 2 der zweiten Stufe 68 gelangen können. Dies wird durch Öffnung des betreffenden Absperrorgans 71 und durch Ingangsetzung der betreffenden Schnecke 29 bzw. 29' erzielt. Zugleich wird die andere Schnecke 29 bzw. 29' stillgesetzt und das ihr benachbarte Absperrorgan 71 geschlossen, so dass nunmehr jener Behälter 1 bzw. 1', aus welchem zuvor die Befüllung des Behälters 2 durchgeführt wurde, in Bezug auf den Behälter 2 abgeschlossen ist. Dieser Behälter 1 bzw. 1' der ersten Stufe 67 kann nun erneut befüllt werden und danach das in ihm befindliche Material mittels der Werkzeuge 21 auf die gewünschte Temperatur gebracht und gehalten werden, wobei der Absperrzustand des betreffenden Behälters 1 bzw. 1' in Bezug auf den Behälter 2 so lange aufrecht erhalten wird, bis die im betreffenden Behälter 1 bzw. 1' befindlichen Materialpartikel die gewünschte Verweilzeit verbracht haben, wie zuvor beschrieben. Danach kann mittels der Einrichtung 70 erneut umgeschaltet werden usw.

Ein zusätzlicher Schieber 59, der mittels eines doppeltwirkenden Zylinders 60 betätigt wird, kann in der Nähe der Beschickungsöffnung 37 des Behälters 2 angeordnet sein. Dadurch lässt sich der Kanal 3 auch in Bezug auf den Behälter 2 vakuumdicht abschließen, so dass gleichsam eine Übergabeschleuse 56 gebildet wird, deren Schleusenkammer 57 über eine Leitung 61 an die Evakuiereihrichtung 9 angeschlossen sein kann. Dadurch können im Behälter 2 auch unterschiedliche Vakuumbedingungen in Bezug auf die Behälter 1,1' aufrecht erhalten werden.

Die Schnecke 47 kann den Bestandteil eines Extruders 62 bilden, der ein Doppelschneckenextruder sein kann. Wie bereits angedeutet, kann aber die Schnecke 47 auch eine reine Transportschnecke sein, welche das von ihr geförderte Material einer weiteren Verarbeitungseinrichtung zuführt, z.B. nach Plastifizierung einer Formanlage.

In die Leitungen 17, 43 können Staubabscheider 66 eingeschaltet sein, welche erforderlichenfalls Staub aus der abgesaugten Luft entfernen.

Es ist zweckmäßig, die Werkzeugträger 22 als Scheiben mit Kreisquerschnitt auszubilden, so dass zwischen dem Rand jeder Scheibe und der Seitenwand 31 des betreffenden Behälters 1, 1', 2 ein Ringspalt 63 entsteht. Nur durch diesen Ringspalt 63 kann das Material den betreffenden Werkzeugträger 22 von oben nach unten passieren, was wesentlich dazu beiträgt, dass für alle im betreffenden Behälter 1 bzw. 1' bzw. 2 befindliche Teilchen gleichmäßige Bedingungen erzielt werden. Hiezu trägt auch die Mehrfachanordnung der Werkzeugträger 22 bei, da jeder Werkzeugträger mit seinen Werkzeugen 21 wieder eine Aufwirbelung des ihm von oben zugeführten Kunststoffmateriales in Form der Mischtrombe 30 bewirkt. Die Anzahl der im jeweiligen Behälter 1, 1' bzw. 2 übereinander angeordneten Werkzeugträger 22 richtet sich nach dem jeweils ins Auge gefassten Anwendungsgebiet. Für die Behälter 1, 1' der ersten Stufe 67 kann jeweils ein einziger Werkzeugträger 22 genügen, gegebenenfalls auch für den Behälter 2 der zweiten Stufe 68, für letzteren sind jedoch mehrere übereinander angeordnete Werkzeugträger 22 günstiger, um auch in diesem Behälter nach Möglichkeit eine gleichmäßige, Verweilzeit aller Künststoffpartikel sicherzustellen.

Bei scheibenförmig ausgebildeten Werkzeugträgern 22 ist es zweckmäßig, den Scheibenrand 65 tellerartig nach oben aufzubiegen bzw. abzuwinkeln, was für den Behälter 2 der zweiten. Stufe 68 dargestellt ist. Dies begünstigt die Ausbildung der Mischtrombe nach oben und wirkt einem frühzeitigen Absinken der Kunststoffteilchen durch den zwischen Scheibenrand und Behälterwänd bestehenden Spalt 63 nach unten entgegen.

Wenn die Anlage für die Verarbeitung bereits vorzerkleinerten Kunststoffmateriales, z.B. PET-Flaschenmahlgut, ausgelegt ist, dann brauchen die Werkzeuge 21 nicht zerkleinernd zu wirken, sie können dann reine Misch- bzw. Erwärmungswerkzeuge sein. Ist jedoch eine Zerkleinerung des zu verarbeitenden Kunststoffmateriale erforderlich, dann ist es zweckmäßig, die Werkzeuge 21 mit Schneidkanten, also messerartig, auszubilden, wobei diese Schneidkanten zweckmäßig so angeordnet sind, dass sich beim Umlauf der Werkzeuge (Pfeile 26) ein ziehender Schnitt ergibt.

Es muss nicht für jeden Höhenbereich des betreffenden Behälters 1, 1', 2 ein Temperaturfühler 32 vorgesehen sein. Zweckmäßig ist es jedoch, die Temperaturfühler 32 auf einer Höhe anzuordnen, in Welche die betreffende Mischtrombe 30 die Wand 31 des jeweiligen Behälters verlässt.

Die Schneckengehäuse 28 bzw. 48 müssen nicht tangential an den jeweiligen Behältern 1, 1' bzw. 2 angeschlossen sein, es ist auch eine radiale Anordnung oder eine Anordnung nach Art einer Sekante in Bezug auf den jeweiligen Behälter möglich. Die tangentiale Anordnung hat aber den Vorteil, dass der die Schnecke 29 bzw. 29' bzw. 47 antreibende Motor 35 bzw. 64 am einen Stirnende des jeweiligen Schneckengehäuses 28 bzw. 28' angeordnet werden kann, und die Austragsöffnung 76 des Schneckengehäuses 28 bzw. 28' am anderen Stirnende desselben. Dies erspart eine seitliche Umlenkung des von der Schnecke 29, 29' geförderten Materiales.

Wie ersichtlich, ist die erfindungsgemäße Ausbildung nicht auf die Anordnung von nur zwei Aufnahmebehältern 1, 1' in der ersten Stufe 67 beschränkt. Es ist vielmehr leicht möglich, die Anzahl der Aufnahmebehälter der ersten Stufe 67 beliebig groß zu wählen, jedoch wird man zumeist mit zwei oder drei Aufnahmebehältern in der ersten Stufe 67 das Auslangen finden.

Gegebenenfalls ist es auch möglich, die von den Aufnahmebehältern 1, 1' der ersten Stufe 67 durchgeführte, alternierende batchweise Beschickung mehr als einem Aufnahmebehälter 2 der zweiten Stufe 68 zuzuleiten, also die erwähnte Beschickung auf mehrere Aufnahmebehälter 2 aufzuteilen.

Ebenso ist es möglich, die Vorrichtung mit drei Stufen auszubilden. Bei einer solchen Konstruktion bildet die erste Stufe eine Vorbehandlungsstufe, aus der die Behälter der zweiten Stufe kontinuierlich oder batchweise beschickt werden können. Die zweite Stufe einer solchen dreistufigen Ausbildung ist dann so ausgebildet, wie bis zuvor für die erste Stufe beschrieben wurde, und analog ist bei einer dreistufigen Ausbildung die letzte Stufe so ausgebildet, wie dies zuvor für die zweite Behandlungsstufe beschrieben wurde.

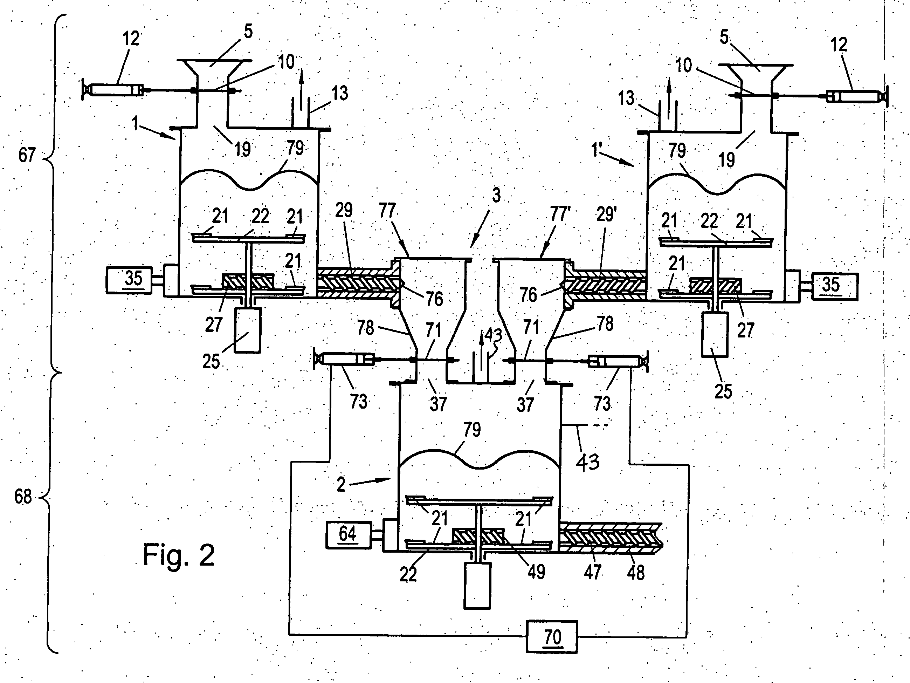

Bei der Ausführungsform nach Fig. 2 ist der Kanal 3 als Kanalsystem ausgebildete, das für die beiden Aufnahmebehälter 1, 1' der ersten (vorangehenden) Stufe 67 in zwei gesonderte Leitungen 77, 77' aufgeteilt ist. Jede dieser Leitungen 77, 77' hat einen mit der Ausgangsöffnung 76 des jeweils zugeordneten, von der Schnecke 29 bzw. 29' gebildeten Austragsorganes 75 in Fließverbindung für das bearbeitete Material stehenden trichterartig ausgebildeten Abschnitt 78. Am unten angeordneten Auslaufende des jeweiligen Trichters 78 liegt das dem jeweiligen Aufnahmebehälter. 1, 1' zugeordnete Absperrorgan 71, und jeder Trichter 78 steht mit einer ihm zugeordneten gesonderten Beschickungsöffnung 37 des Aufnahmebehälters 2 der letzten Stufe in Fließverbindung. Die in den Behältern 1, 1', 2 beim Umlauf der Werkzeuge 21 erzeugten Mischtromben sind mit 79 bezeichnet. Die beiden Behälter 1, 1' der vorangehenden Stufe 67 werden hier batchweise beschickt. Für eine solche Beschickung genügt es, einen einzigen Verschlussschieber 10 im Bereich der Einbringeöffnung 19 anzuordnen, der von einem doppeltwirkenden Zylinder 12 verschoben wird. Ansonst entspricht die Bauweise der Vorrichtung nach Fig. 2 und ihre Betriebsweise im wesentlichen jener der Ausführungsform nach Fig. 1.

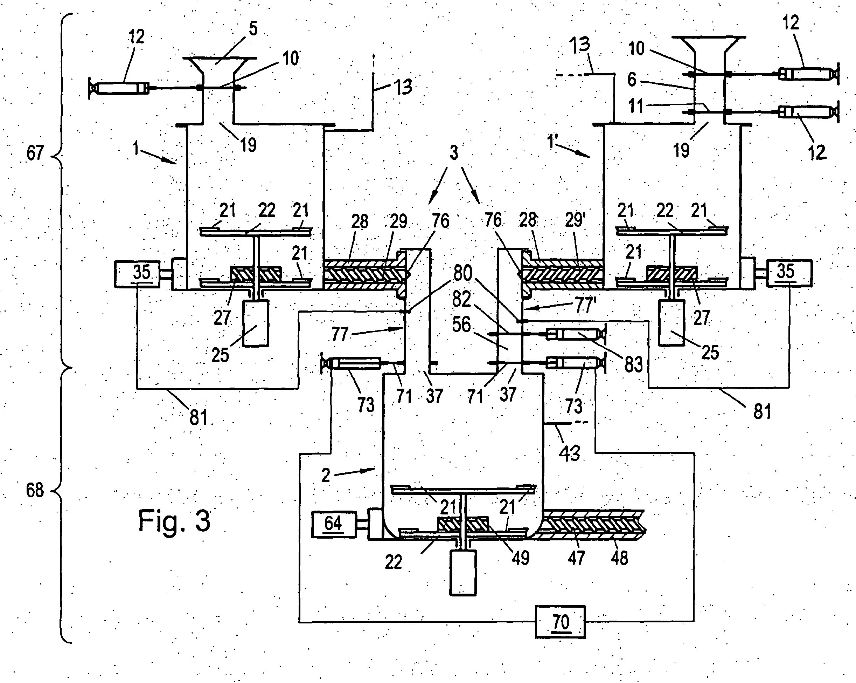

Bei der Ausführungsform nach Fig. 3 sind wie bei der Ausführungsform nach Fig. 2 zwei gesonderte Leitungen 77, 77' des Kanales 3 für die beiden Behälter 1, 1' der vorangehenden Stufe 67 vorgesehen, die durch Absperrorgane 71 wechselweise geöffnet bzw. verschlossen werden. In jeder dieser Leitungen 77, 77' liegt ein Sensor 80 zur Abfühlung der Menge des Materiales, welches von der jeweiligen Schnecke 29, 29' zugeliefert wird und sich bei geschlossenem Absperrorgan 71 oberhalb desselben aufstaüt. Dieser Sensor 80 ist über eine Leitung 81 mit dem Motor 35 für die jeweils zugeordnete Schnecke 29, 29' verbunden, sodass dieser Motor 35 so gesteuert wird, dass bei Überschreiten eines vorbestimmten Füllniveaus in der Leitung 77, 77', weiches Niveau durch den Sensor 80 abgefühlt, wird, die betreffende Schnecke 29 bzw. 29' stillgesetzt wird.

Für den rechts angeordneten Abschnitt 77' des Kanales 3 ist dargestellt, dass oberhalb des Absperrorganes 71 noch ein weiteres Absperrorgan 82 vorgesehen ist, welches vorzugsweise von einem Schieber gebildet ist, der von einem doppeltwirkenden Zylinder 83 verschoben wird. Dieses Absperrorgan 82 bildet zusammen mit dem Absperrorgan 71 eine Schleuse, die evakuiert und gegebenenfalls mit Schutzgas bespült sein kann, ähnlich, wie dies für die Schleuse 57 in Fig. 1 dargestellt ist. Der zugeordnete Sensor 80 liegt selbstverständlich oberhalb dieses zusätzlichen Absperrorgans 82.

Ferner ist für den rechts dargestellten Aufnahmebehälter 1' eine Schleuse 6 ähnlich jener in Fig. 1 dargestellt, wogegen für den links dargestellten Aufnahmebehälter 1' lediglich ein einziger Schieber 10 ähnlich Fig. 2 dargestellt ist.

Diese Varianten (Schieber 10 bzw. Schleuse, 56 bzw. Schleuse 6) können selbstverständlich in beliebiger Weise miteinander kombiniert werden.

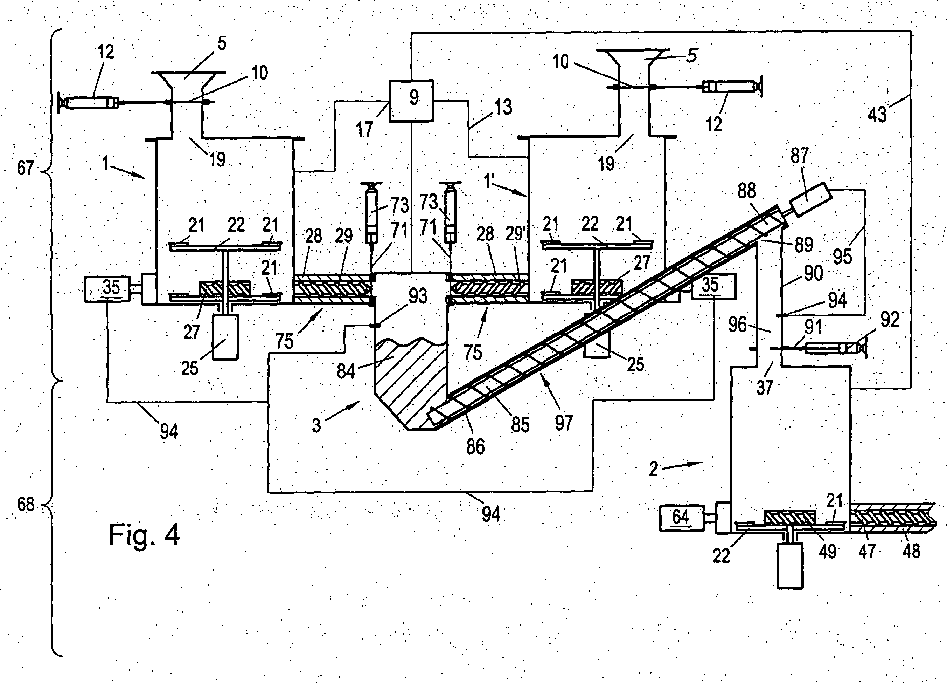

Bei der Ausführungsform nach Fig. 4 beinhaltet der Kanal 3 auch einen Sammelraum 84, welche von den beiden Austragsorganen 75 (Schnecken 29, 29') der Aufnahmebehälter 1, 1' der ersten Stufe 67 wechselweise (gesteuert durch die Absperrorgane 71 der Einrichtung 70) mit Material beschickt wird. Dieser, den Sammelraum 84 bildende Abschnitt des Kanals 3 ist trichterartig ausgebildet und in sein unteres Ende ragt eine Fördereinrichtung 97, insbesondere eine Förderschnecke 85, hinein, die in einem Gehäuse 86 gelagert ist und von einem Motor 87 zur Drehbewegung angetrieben ist. Das Förderende 88 der Schnecke 85 liegt über einer Öffnung 89 des Schneckengehäuses 86, sodass das von der Schnecke 85 geförderte Material in einen Stutzen 90 des Kanals 3 fällt, in welchem ein Schieber 91 angeordnet ist, der von einem Zylinder 92 verschoben werden kann und auf diese Weise die Materialeinbringung in die Befüllungsöffnung 37 des Aufnahmebehälters 2 der letzten Stufe 68 steuert. Dieser Schieber 91 ist nur dann erforderlich, wenn eine solche Steuerung gewünscht ist.

Zur Niveausteuerung des Materiales im Sammelraum 84 ist ein Sensor 93 vorgesehen, der über Leitungen 94 den Motor 35 der jeweils in Betrieb befindlichen Schnecke 29 bzw. 29' der beiden Austragsorgane 75 so steuert, dass das Füllniveau im Sammelraum 84 stets oberhalb eines vorbestimmten Minimalniveaus und unterhalb eines vorbestimmten Maximalniveaus gehalten wird.

In analoger Weise ist für den Stutzen 90 ein Sensor 94 vorgesehen, weicher über eine Leitung 95 mit dem Motor 87 der Schnecke 85 verbunden ist und diesen Motor so steuert, dass das Füllniveau im einen Sammelraum 96 bildenden Stutzen 90 innerhalb gewisser Grenzen gehalten wird.

Die Anordnung einer solchen Schnecken 85 hat den Vorteil, dass die Lage des Aufnahmebehälters 2 der zweiten Stufe 68 unabhängig von der Lage der Aufnahmebehälter 1, 1' der vorangehenden Stufe 67 gewählt werden kann, sodass Niveauunterschiede oder räumliche Entfernungen überbrückt werden können. Um sich an unterschiedliche diesbezügliche Verhältnisse anpassen, zu können, ist die Anordnung zweckmäßig so getroffen, dass das Gehäuse 86 der Schnecke 85 in verschiedener Richtung an den Sammelraum 84 angeschlossen werden kann.

Der Sammelraum 84 und auch das Gehäuse 86 der Schnecke 85 sind vakuumdicht ausgeführt und können von der Evakuierungseinrichtung 9 evakuiert werden. Gegebenenfalls kann auch für alle jene Bauteile, welche evakuierbar sind, eine Schutzgasspülung vorgesehen sein, wofür diese Bauteile (Behälter 1, 1', 2, Sammelraum 84, Gehäuse 86, Stutzen 90) in nicht dargestellter Weise an eine Schützgasquelle über geeignete Leitungen angeschlossen sein können. Durch diese Maßnahmen wird ein Luftzutritt zum empfindlichen, bearbeiteten Kunststoffmaterial vermieden, sodass Schädigungen dieses Materiales vermieden werden.

Wie ersichtlich, bildet bei allen Ausführungsformen der Kanal 3, welche Form bzw. Ausbildung er auch immer hat, einen vakuumdichten Übergang zwischen den beiden Behandlungsstufen 67, 68, um die erwähnte Luftschädigung des Materiales zu vermeiden.

Wie erwähnt, können die Aufnahmebehälter 1, 1' bzw. 2 mit unterschiedlichen Drücken betrieben werden, solche unterschiedliche Drücke können auch im Sammelraum 84 bzw. im Schneckengehäuse 86 vorherrschen. Um zu vermeiden, dass durch die dadurch bedingten Druckdifferenzen ein Materialrückfluss von der letzten Stufe 68 in die vorangehende Stufe 67 stattfindet, kann eine Ausgleichseinrichtung vorhanden sein, welche einen solchen Rückfluss verhindert. Bei der Ausführungsform nach Fig. 4 kann in einfacher Weise eine solche Ausgleichseinrichtung vom durch den Zylinder 92 betätigten Schieber 91 gebildet sein, oder es kann ein zusätzlicher Schieber in den Stutzen 90 eingebracht werden, welcher bei einem höheren, im Aufnahmebehälter 2 herrschenden Druck (im Vergleich zu den vorgeschalteten Anlagenteilen) den Stutzen 90 für die erforderliche Zeit abschließt.

Im Prinzip können die Ausführungsformen nach den Fig. 2 bis 4 in derselben Weise betrieben werden, wie dies bereits für die Ausführungsform nach Fig. 1 beschrieben wurde. Für alle Ausführungsformen gilt weiters, dass die Aufnahmebehälter 1, 1' der vorangehenden Stufe 67 und bzw. oder der letzten Stufe 68 gewichtsdosiert beschickt werden. Für die Aufnahmebehälter 1, 1' lässt sich eine solche Gewichtsdosierung in einfacher Weise mittels für die Befüllung der Schleusen 6 vorgesehenen Wiegeeinrichtungen durchführen, und in analoger Weise kann für den Aufnahmebehälter 2 eine Gewichtsdosierung mittels das Gewicht der Materialmenge oberhalb des Schiebers 59 bzw. 91 abfühlenden Wiegeeinrichtung erfolgen.

Es ist zweckmäßig, das Material in den Aufnahmebehältern der vorangehenden Stufe 67 durch Einbringung entsprechend hoher Mischenergie rasch zu erwärmen und sodann nach Erreichung der gewünschten Temperatur durch Einbringungen reduzierter Mischenergie auf dieser vorbestimmten Temperatur bzw. innerhalb eines vorbestimmten Temperaturintervalls zu halten. Die Temperaturfühler 32 können hierfür nutzbar gemacht werden. Da die Aufnahmebehälter 1, 1' und gegebenenfalls auch der Aufnahmebehälter 2 jeweils einen Kristallisationstrockner darstellen, in welchem das Material durch die über die umlaufenden Mischwerkzeuge 21 eingebrachte Mischenergie erwärmt und dadurch getrocknet und zumindest teilweise kristallisiert wird, ist es verfahrensmäßig zweckmäßig, das Material in den Aufnahmebehältern 1, 1' der vorangehenden Stufe 67 für eine vorbestimmte Verweilzeit auf der bereits erwähnten vorbestimmten Temperatur bzw. innerhalb eines vorbestimmten Temperaturintervalls zu halten, was durch die Temperaturfühler 32 in einfacher Weise gesteuert werden kann.

Statt des in Fig. 1 dargestellten Förderbandes 4 kann für die Beschickung des Aufnahmebehälters 1, 1' der vorgeschalteten Stufe 67 selbstverständlich auch eine andere Beschickungseinrichtung verwendet werden, etwa Förderbänder, Förderschnecken oder Vakuum- oder Druckfördersysteme.

Gleichfalls nicht zwingend ist die in Fig. 1 dargestellte Entgasung (Entgasungsöffnungen 52) für den Extruder 62, da bei Vorliegen entsprechend zu verarbeitenden Materiales auch entgasungslose Extruder problemlos arbeiten.

Der Ausdruck "zu recyceln" ist nicht restriktiv in dem Sinne aufzufassen, dass nur, insbesondere verunreinigtes, Abfallmaterial verarbeitet werden kann. Vielmehr erstreckt sich die Erfindung auch auf die Verarbeitung von Neuware, also z.B. für die Umarbeitung von nicht mehr benötigter Neuware in Granulat oder andersgeartete Formprodukte.

## Patentansprüche

1. Vorrichtung zur Aufbereitung von thermoplastischem, zu recycelndem Kunststoffmaterial mit zumindest zwei in Bezug auf den Materialfluss aufeinanderfolgenden Behandlungsstufen (67, 68) für das Material, wobei in jeder Stufe das Material in einen Aufnahmebehälter (1, 1', 2) von oben eingebracht und im Aufnahmebehälter (1, 1', 2) durch umlaufende Werkzeuge (21) erwärmt und gemischt, gegebenenfalls auch zerkleinert; wird und das so behandelte Material aus dem betreffenden Aufnahmebehälter (1, 1', 2) mittels eines Austragsorgans (75), vorzugsweise mittels zumindest einer Schnecke (29, 29', 47), ausgebracht wird, **dadurch gekennzeichnet, dass** in der ersten Stufe (67) oder in zumindest einer darauf folgenden Stufe zumindest zwei evakuierbare Aufnahmebehälter (1, 1') vorhanden sind, die parallel an einen evakuierbaren Aufnahmebehälter (2) der letzten Stufe (68) angeschlossen sind, wobei eine Einrichtung (70) zur alternierenden batchweisen Beschickung des Aufnahmebehälters (2), der letzten Stufe (68) aus den Aufnahmebehältern (1, 1') der vorangehenden Stufe (67) vorgesehen ist, und dass das Austragsorgan (75) jedes Aufnahmebehälters (1, 1') der vorangehenden Stufe (67) in einen Kanal (3) fördert, in welchem für jeden Aufnahmebehälter (1, 1') der vorangehenden Stufe (67) ein Absperrorgan (71) vorgesehen ist, welches von der Einrichtung (70) zur alternierenden batchweisen Beschickung des Aufnahmebehälters (2) der letzten Stufe (68) gesteuert ist.

2. Vorrichtung nach Anspruch 1, **dadurch gekennzeichnet, dass** der Kanal (3) die Austragsöffnungen (27) der Aufnahmebehälter (1, 1') der vorangehenden Stufe (67) oder die Ausgangsöffnungen (76) der Austragsorgane (75) dieser Aufnahmebehälter (1, 1') mit einer Beschickungsöffnung (37) des Aufnahmebehälters (2) der letzten Stufe (68) verbindet und dass die Einrichtung (70) eine Steuereinrichtung (74) aufweist, welche die Absperrorgane (71) im Sinne eines wechselweisen Abschlusses der Aufnahmebehälter (1, 1') der vorangehenden Stufe (67) in Bezug auf den Aufnahmebehälter (2) der letzten Stufe (68) steuert.

3. Vorrichtung nach Anspruch 1 oder 2, **dadurch gekennzeichnet, dass** die Absperrorgane (71) von Schiebern gebildet sind.

4. Vorrichtung nach einem der Ansprüche 1 bis 3, **dadurch gekennzeichnet, dass** an die Befüllungsöffnungen der Aufnahmebehälter (1, 1') der vorangehenden Stufe (67) und/oder an die Beschickungsöffnung (37) des Aufnahmebehälters (2) der letzten Stufe Vakuumschleusen, (6 bzw. 56) angeschlossen sind.

5. Vorrichtung nach einem der Ansprüche 1 bis 4, **dadurch gekennzeichnet, dass** der Kanal (3) einen vakuumdichten Übergang zwischen der vorangehenden Stufe (67) und der letzten Stufe (68) bildet.

6. Vorrichtung nach Anspruch 5, **dadurch gekennzeichnet, dass** der vakuumdichte Übergang evakuierbar ist.

7. Vorrichtung nach einem der Ansprüche 1 bis 6, **dadurch gekennzeichnet, dass** eine Ausgleichseinrichtung zur Verhinderung eines Materialrückftüsses von der letzten Stufe (68) in die vorangehende Stufe (67) bei unterschiedlichen Drücken in den beiden Stufen (67, 68) vorgesehen ist.

8. Vorrichtung nach einem der Ansprüche 1 und 3 bis 7, **dadurch gekennzeichnet, dass** die Austragsorgane (75) der Aufnahmebehälter (1, 1') der vorangehenden Stufe (67) über gesonderte Leitungen (77, 77') des Kanals (3) zu Beschickungsöffnungen (37) des Aufnahmebehälters (2) der letzten Stufe (68) fördern.

9. Vorrichtung nach einem der Ansprüche 1 bis 8, **dadurch gekennzeichnet, dass** der Kanal (3) oder zumindest eine seiner Leitungen (77, 77') bzw. zumindest ein Abschnitt des Kanals (3) trichterartig ausgebildet ist.

10. Vorrichtung nach einem der Ansprüche 1 bis 9, **dadurch gekennzeichnet, dass** der Kanal (3) zumindest einen Sammelraum (84, 96) aufweist, der vorzugsweise über eine gegen Luftzutritt abgeschlossene Fördereinrichtung (97), insbesondere eine Förderschnecke (85), mit der Beschickungsöffnung (37) des Aufnahmebehälter (2) der letzten Stufe (68) in Fließverbindung steht.

11. Vorrichtung nach Anspruch 10, **dadurch gekennzeichnet, dass** die Fördereinrichtung (97) und der Sammelraum (96) vakuumdicht sind und an eine Evakuierungseinrichtung (9) angeschlossen sind.

12. Vorrichtung nach Anspruch 10 oder 11, **dadurch gekennzeichnet, dass** das Förderende (88) der Fördereinrichtung (97) an einen mit der Beschickungsöffnung (37) des Aufnahmebehälters (2) in Fließverbindung stehenden Sammelraum (96) angeschlossen ist.

13. Vorrichtung nach einem der Ansprüche 1 bis 12, **dadurch gekennzeichnet, dass** zumindest ein Sensor (93, 94) zur Abfühlung des Füllniveaus im Kanal (3) bzw. im Sammelraum (84, 96) vorgesehen ist, welcher Sensor die Materialzulieferung zum Kanal (3) bzw. zum Sammelraum (84, 96) steuert.

14. Vorrichtung nach einem der Ansprüche 1 bis 13, **dadurch gekennzeichnet, dass** zumindest einer der evakuierbaren Bauteile der Vorrichtung mit Schutzgas flutbar ist.

15. Verfahren zur Aufbereitung von thermoplastischem, zu recycelndem Kunststoffmaterial mittels einer Vorrichtung nach einem der Ansprüche 1 bis 14, **dadurch gekennzeichnet, dass** der Aufnahmebehälter (2) der letzten Stufe (68) wechselweise von den Aufnahmebehältern (1, 1') der vorangehenden Stufe (67), aber möglichst kontinuierlich, beschickt wird.

16. Verfahren nach Anspruch 15, **dadurch gekennzeichnet, dass** während der allmählichen Entleerung eines Aufnahmebehälters (1, 1') der vorangehenden Stufe (67) in den Aufnahmebehälter (2) der letzten Stufe (68) die anderen Aufnahmebehälter (1, 1') der vorangehenden Stufe befüllt werden und/oder das in ihnen befindliche Material auf die gewünschte Temperatur gebracht und gehalten wird.

17. Verfahren nach Anspruch 15 oder 16, **dadurch gekennzeichnet, dass** die Aufnahmebehälter (1, 1') der vorangehenden Stufe (67) und/oder der Aufnahmebehälter (2) der letzten Stufe (68) gewichtsdosiert beschickt werden.

18. Verfahren nach einem der Ansprüche 15 bis 17, **dadurch gekennzeichnet, dass** das Material im Aufnahmebehälter (1, 1') der vorangehenden Stufe (67) durch Einbringung von Mischenergie rasch erwärmt und sodann durch Einbringung reduzierter Mischenergie auf einer vorbestimmten Temperatur bzw. innerhalb eines vorbestimmten Temperaturintervalls gehalten wird.

19. Verfahren nach Anspruch 18, **dadurch gekennzeichnet, dass** das Material im Aufnahmebehälter (1, 1') der vorangehenden Stufe (67) für eine vorbestimmte Verweilzeit auf einer vorbestimmten Temperatur bzw. innerhalb eines vorbestimmten Temperaturintervalls gehalten wird.

## Claims

1. An apparatus for processing of thermoplastic plastics material to be recycled, with at least two treatment stages (67, 68) - following one after the other with respect to the flow of material - for the material, wherein in each stage the material is introduced into a receiving container (1, 1', 2) from above and is heated and mixed, and optionally also crushed, in the receiving container (1, 1', 2) by rotating tools (21), and the material treated in this way is discharged from the respective receiving container (1, 1', 2) by means of a discharge member (75), preferably by means of at least one screw (29, 29', 47), **characterized in that** at least two receiving containers (1, 1'), which are capable of being evacuated and which are attached in parallel to a receiving container (2) - capable of being evacuated - of the last stage (68), are present in the first stage (67) or in at least one subsequent stage, wherein a device (70) for the alternating batch-wise charging of the receiving container (2) of the last stage (68) from the receiving containers (1, 1') of the preceding stage (67) is provided, and the discharge member (75) of each receiving container (1, 1') of the preceding stage (67) leads into a channel (3) in which a shut-off member (71) is provided for each receiving container (1, 1') of the preceding stage (67), the shut-off member (71) being controlled by the device (70) for the alternating batch-wise charging of the receiving container (2) of the last stage (68).

2. An apparatus according to Claim 1, **characterized in that** the channel (3) connects the discharge openings (27) of the receiving containers (1, 1') of the preceding stage (67) or the outlet openings (76) of the discharge members (75) of the said receiving containers (1, 1') to a charging opening (37) of the receiving container (2) of the last stage (68), and the device (70) comprises a control device (74) which controls the shut-off members (71) in the manner of an alternating closure of the receiving containers (1, 1') of the preceding stage (67) with respect to the receiving container (2) of the last stage (68).

3. An apparatus according to Claim 1 or 2, **characterized in that** the shut-off members (71) are formed by slides.

4. An apparatus according to any one of Claims 1 to 3, **characterized in that** vacuum sluices (6 and 56 respectively) are attached to the filling openings of the receiving containers (1, 1') of the preceding stage (67) and/or to the charging opening (37) of the receiving container (2) of the last stage.

5. An apparatus according to any one of Claims 1 to 4, **characterized in that** the channel (3) forms a vacuum-tight transition between the preceding stage (67) and the last stage (68).

6. An apparatus according to Claim 5, **characterized in that** the vacuum-tight transition is capable of being evacuated.

7. An apparatus according to any one of Claims 1 to 6, **characterized in that** an equalizing device is provided in order to prevent a backflow of material from the last stage (68) into the preceding stage (67) at different pressures in the two stages (67, 68).

8. An apparatus according to any one of Claims 1 and 3 to 7, **characterized in that** the discharge members (75) of the receiving containers (1, 1') of the preceding stage (67) lead to charging openings (37) of the receiving container (2) of the last stage (68) by way of separate lines (77, 77') of the channel (3).

9. An apparatus according to any one of Claims 1 to 8, **characterized in that** the channel (3) or at least one of its lines (77, 77') or at least a portion of the channel (3) respectively is constructed in the manner of a funnel.

10. An apparatus according to any one of Claims 1 to 9, **characterized in that** the channel (3) comprises at least one collecting chamber (84, 96) which is connected in terms of flow to the charging opening (37) of the receiving container (2) of the last stage (68) preferably by way of a conveyor device (97) sealed off against the ingress of air, and in particular a conveyor screw (85).

11. An apparatus according to Claim 10, **characterized in that** the conveyor device (97) and the collecting chamber (96) are vacuum-tight and are connected to an evacuation device (9).

12. An apparatus according to Claim 10 or 11, **characterized in that** the conveying end (88) of the conveyor device (97) is connected to a collecting chamber (96) connected in terms of flow to the charging opening (37) of the receiving container (2).

13. An apparatus according to any one of Claims 1 to 12, **characterized in that** at least one sensor (93, 94) is provided for sensing the filling level in the channel (3) and in the collecting chamber (84, 96) respectively, which sensor controls the delivery of material to the channel (3) and to the collecting chamber (84, 96) respectively.

14. An apparatus according to any one of Claims 1 to 13, **characterized in that** at least one of the components of the apparatus which are capable of being evacuated is capable of being flooded with protective gas.

15. A method for processing thermoplastic plastics material to be recycled, by means of an apparatus according to any one of Claims 1 to 14, **characterized in that** the receiving container (2) of the last stage (68) is charged alternately and, as far as possible, continuously from the receiving containers (1, 1') of the preceding stage (67).

16. A method according to Claim 15, **characterized in that**, during the gradual emptying of a receiving container (1, 1') of the preceding stage (67) into the receiving container (2) of the last stage (68), the other receiving containers (1, 1') of the preceding stage are filled and/or the material present in them is brought to and kept at the desired temperature.

17. A method according to Claim 15 or 16, **characterized in that** the receiving containers (1, 1') of the preceding stage (67) and/or the receiving container (2) of the last stage (68) are charged in a manner metered according to weight.

18. A method according to any one of Claims 15 to 17, **characterized in that** the material in the receiving container (1, 1') of the preceding stage (67) is rapidly heated by the introduction of mixing energy and is then kept at a pre-determined temperature or within a pre-determined temperature range respectively by the introduction of reduced mixing energy.

19. A method according to Claim 18, **characterized in that** the material in the receiving container (1, 1') of the preceding stage (67) is kept at a pre-determined temperature or within a pre-determined temperature range respectively for a pre-determined dwell period.

## Revendications

1. Dispositif de traitement de matières thermoplastiques à recycler avec au moins deux étages de traitement (67, 68) du matériau prévus l'un après l'autre par rapport au sens d'écoulement dudit matériau, le matériau étant, dans chaque étage, introduit par le haut dans un conteneur (1, 1', 2) où il est échauffé et mélangé, voire également broyé, par des outils rotatifs (21), le matériau ainsi traité étant évacué du conteneur considéré (1, 1', 2) au moyen d'un organe extracteur (75), de préférence une vis sans fin (29, 29', 47), **caractérisé en ce qu'**il est prévu, au premier étage (67) ou au moins à un étage suivant le premier étage, au moins deux conteneurs (1, 1') dont l'air peut être évacué et qui sont raccordés en parallèle à un conteneur (2) du dernier étage (68), dont l'air peut également être évacué, un dispositif (70) étant prévu pour alimenter le conteneur (2) du dernier étage (68) avec des charges provenant en alternance des conteneurs (1, 1') de l'étage précédent (67), et **en ce que** l'organe extracteur (75) de chaque conteneur (1, 1') de l'étage précédent (67) transporte le matériau vers un canal (3) dans lequel il est prévu, pour chaque conteneur (1, 1') de l'étage précédent (67), un organe d'arrêt (71) qui est commandé par le dispositif (70) d'alimentation par charges alternées du conteneur (2) du dernier étage (68).

2. Dispositif selon la revendication 1, **caractérisé en ce que** le canal (3) relie les ouvertures d'évacuation (27) des conteneurs (1, 1') de l'étage précédent (67) ou les ouvertures de sortie (76) des organes extracteurs (75) desdits conteneurs (1, 1') à une ouverture d'admission (37) du conteneur (2) du dernier étage (68) et **en ce que** le dispositif (70) comporte un dispositif de commande (74) qui commande les organes d'arrêt (71) de manière à ce que ceux-ci isolent alternativement les conteneurs (1, 1') de l'étage précédent (67) par rapport au conteneur (2) du dernier étage (68).

3. Dispositif selon la revendication 1 ou la revendication 2, **caractérisé en ce que** les organes d'arrêt (71) consistent en des vannes d'arrêt.

4. Dispositif selon l'une quelconque des revendications 1 à 3, **caractérisé en ce que** des sas à vide (6 et/ou 56) sont raccordés aux ouvertures de remplissage des conteneurs (1, 1') de l'étage précédent (67) et/ou à l'ouverture d'admission (37) du conteneur (2) du dernier étage.

5. Dispositif selon l'une quelconque des revendications 1 à 4, **caractérisé en ce que** le canal (3) forme un jonction étanche au vide entre le dernier étage (68) et l'étage précédent (67).

6. Dispositif selon la revendication 5, **caractérisé en ce qu'**il est possible d'évacuer l'air présent dans la jonction étanche au vide.

7. Dispositif selon l'une quelconque des revendications 1 à 6, **caractérisé en ce qu'**un dispositif d'équilibrage est prévu pour empêcher le matériau de refluer du dernier étage (68) vers l'étage précédent (67) en cas de différentiel de pression dans les deux étages (67, 68).

8. Dispositif selon l'une quelconque des revendications 1 et 3 à 7, **caractérisé en ce que** les organes extracteurs (75) des conteneurs (1, 1') de l'étage précédent (67) transportent le matériau via des conduits séparés (77, 77') du canal (3) en direction d'ouvertures d'admission (37) que présente le conteneur (2) du dernier étage (68).

9. Dispositif selon l'une quelconque des revendications 1 à 8, **caractérisé en ce que** le canal (3) ou au moins un de ses conduits (77, 77') ou au moins un tronçon du canal (3) affecte une forme de trémie.

10. Dispositif selon l'une quelconque des revendications 1 à 9, **caractérisé en ce que** le canal (3) présente au moins une chambre collectrice (84, 96) qui communique inférieurement avec l'ouverture d'admission (37) du conteneur (2) du dernier étage (68) de préférence via un dispositif de transport (97) étanche à l'air, notamment un transporteur à vis sans fin (85).

11. Dispositif selon la revendication 10, **caractérisé en ce que** le dispositif de transport (97) et la chambre collectrice (96) sont étanches au vide et raccordés à un dispositif de production de vide (9).

12. Dispositif selon la revendication 10 ou la revendication 11, **caractérisé en ce que** l'extrémité (88) du dispositif de transport (97) est reliée à une chambre collectrice (96) qui communique inférieurement avec l'ouverture d'admission (37) du conteneur (2).

13. Dispositif selon l'une quelconque des revendications 1 à 12, **caractérisé en ce qu'**il est prévu au moins un capteur (93, 94) pour mesurer le niveau de remplissage du canal (3) ou de la chambre collectrice (84, 96), ledit capteur commandant l'admission de matériau dans le canal (3) ou la chambre collectrice (84, 96).

14. Dispositif selon l'une quelconque des revendications 1 à 13, **caractérisé en ce qu'**au moins un des composants du dispositif dont l'air peut être évacué peut être rempli de gaz protecteur.

15. Procédé de traitement de matières thermoplastiques à recycler au moyen d'un dispositif selon l'une des revendications 1 à 14, **caractérisé en ce que** le conteneur (2) du dernier étage (68) est alimenté alternativement par les conteneurs (1, 1') de l'étage précédent (67) mais d'une manière aussi continue que possible.

16. Procédé selon la revendication 15, **caractérisé en ce que** pendant qu'un conteneur (1, 1') de l'étage précédent (67) se vide progressivement dans le conteneur (2) du dernier étage (68), les autres conteneurs (1, 1') de l'étage précédent se remplissent et/ou le matériau qu'ils contiennent est porté ou maintenu à la température souhaitée.

17. Procédé selon la revendication 15 ou 16, **caractérisé en ce que** le conteneur (1, 1') de l'étage précédent (67) et/ou le conteneur (2) du dernier étage (68) est/sont alimenté(s) avec dosage pondéral.

18. Procédé selon l'une quelconque des revendications 15 à 17, **caractérisé en ce que** le matériau contenu dans le conteneur (1, 1') de l'étage précédent (67) est échauffé rapidement par apport d'énergie de mélangeage puis est maintenu à une température prédéfinie ou dans une plage de température prédéfinie par apport d'une moindre énergie de mélangeage.

19. Procédé selon la revendication 18, **caractérisé en ce que** le matériau contenu dans le conteneur (1, 1') de l'étage précédent (67) est maintenu pendant un laps de temps prédéfini à une température prédéfinie ou dans une plage de température prédéfinie.
